**Europäisches Patentamt**

**European Patent Office**

**Office européen des brevets**

(19)

(11) Veröffentlichungsnummer: **0 256 314**
**A2**

(12) **EUROPÄISCHE PATENTANMELDUNG**

(21) Anmeldenummer: **87110211.7**

(22) Anmeldetag: **15.07.87**

(51) Int. Cl.⁴: **G01N 21/39 , G01N 21/21**

(30) Priorität: **16.08.86 DE 3627876**

(43) Veröffentlichungstag der Anmeldung:
**24.02.88 Patentblatt 88/08**

(84) Benannte Vertragsstaaten:
**BE DE ES GB GR SE**

(71) Anmelder: **Felten & Guilleaume**
**Energietechnik GmbH**
**Schanzenstrasse 24-30 Postfach 80 50 01**
**D-5000 Köln 80(DE)**

(72) Erfinder: **Federmann, Helmut, Dr.**
**Holunderweg 17**
**D-5060 Bergisch Gladbach(DE)**
Erfinder: **Levacher, Friedrich Karl, Dr.**
**Medardusstrasse 24**
**D-5024 P. Brauweiler(DE)**
Erfinder: **Noack, Georg, Dr.-Ing.**
**Eschenweg 9**
**D-5060 Bergisch Gladbach 2(DE)**

(54) Verfahren und Einrichtung zum Messen der Gaskonzentration in einem Gasgemisch.

(57) Man überträgt Licht über eine optische Faser zu einer Meßzelle, die das zu untersuchende Gas enthält, läßt es durch die Meßzelle hindurchtreten, überträgt das austretende Licht über eine optische Faser zu einer Meßeinrichtung und vergleicht es dort mit einem Referenzlicht. Bekannt ist, hierbei die Absorption von Licht bei einer für Methangas charakteristischen Absorptionswellenlänge auszunutzen. Die Aufgabe lautet nun, die Gaskonzentration nach einem anderen Prinzip zu bestimmen. Die Lösung besteht im wesentlichen darin, daß man die Veränderung der optischen Dichte des Gasgemisches in einer Meßküvette aus einem Vergleich mit der beim Zeeman-Effekt auftretenden Schwebungsfrequenz des Lichtes ermittelt. Dazu wird der Resonator eines Lasers axial von einem Magnetfeld durchsetzt, womit er zwei polarisierte Lichtstrahlen gering unterschiedlicher Frequenz aussendet, die sich zu einer Schwebung überlagern, deren Frequenz man über Fotodioden mißt. Man trennt die beiden Frequenzen voneinander, führt die eine durch die Meßküvette und die andere durch eine Referenzküvette, überlagert beide wieder, zählt die Frequenz der Meßschwebung hoch und vergleicht diese mit der Frequenz der Referenzschwebung am Ausgang des Lasers.

## Verfahren und Einrichtung zum Messen der Gaskonzentration in einem Gasgemisch

Die Erfindung betrifft ein Verfahren und eine Einrichtung zum Messen der Gaskonzentration in einem Gasgemisch nach dem Oberbegriff des Anspruchs 1 bzw. 4. Es arbeitet mit einem optischen Gassensor unter Ausnutzung des Zeeman-Effekts und eignet sich besonders zur Uberwachung von explosiven Gasen im Bergbau ($CH_4$-Überwachung), in der Offshore-Technik und in der chemischen Industrie.

Ein Meßverfahren nach dem Oberbegriff des Anspruchs 1 und das zugehörige Meßgerät sind aus der DE-OS 33 34 264 bekannt. Dort wird Licht mit mindestens einem Frequenzband bei 1,6 und/oder 1,3 $\mu$m über eine optische Faser mit geringem Übertragungsverlust in dem betreffenden Frequenzband zu einer Meßzelle übertragen, in die Gas aus der Umgebung eintritt und aus der Gas wieder austritt. Dabei wird das Licht bei Vorhandensein von Methangas ($CH_4$-Gas)bei mindestens einer charakteristischen Absorptionswellenlänge (1,666 und/oder 1,331 $\mu$m) absorbiert Über eine weitere optische Faser gelangt das Licht aus der Meßzelle zu einem Bandpaß-Filter, wo mindestens ein Band ausgefil tert wird, in dem die Absorptionswellenlänge für $CH_4$-Gas liegt. Außerdem wird Licht mit einer anderen Wellenlänge gemessen, und man bestimmt das Intensitätsverhältnis für die beiden Bänder, um daraus die $CH_4$-Gaskonzentration zu berechnen.

Das Prinzip dieses Meßverfahrens nutzt die Absorption von Licht der Wellenlängen 1,666 und/oder 1,331 $\mu$m, die durch die Anwesenheit von $CH_4$-Gas entsteht, um mittels einer Referenzabsorption bei einer anderen Wellenlänge die $CH_4$-Gaskonzentration in einem Gasgemisch zu bestimmen.

Der Erfindung liegt die Aufgabe zugrunde, die Gaskonzentration in einem Gasgemisch nach einem anderen Prinzip als mittels der Absorption von Licht zu bestimmen.

Diese Aufgabe wird bei einem gattungsgemäßen Verfahren durch die kennzeichnenden Merkmale des Anspruchs 1 gelöst. Die Lösung besteht im wesentlichen darin, daß man die Veränderung der optischen Dichte des Gasgemisches in einer Meßküvette aus der Laufzeitänderung des Lichtes durch einen Vergleich mit der beim Zeeman-Effekt auftretenden Schwebungsfrequenz des Lichtes ermittelt.

Zeeman-Effekt ist die Bezeichnung für die um 1900 von P. Zeeman entdeckte Aufspaltung der Spektrallinien, wenn die emittierenden Atome sich in einem (homogenen) Magnetfeld befinden. Ursache ist die gequantelte räumliche Einstellung des Hüllendrehimpulses der Atome zur Magnetfeldrichtung und die dadurch bewirkte Aufspaltung ihrer Energieterme.

Im erfindungsgemäßen Fall wird der Resonator eines He-Ne-Lasers axial von einem starken Magnetfeld durchsetzt, und er sendet folglich zwei entgegengesetzt zirkularpolarisierte Lichtstrahlen aus, die sich auch noch geringfügig in ihrer Frequenz unterscheiden. Die Uberlagerung dieser beiden Schwingungen ergibt eine Schwebung, deren Frequenz über geeignete Detektoren (schnelle Fotodioden) gemessen wird.

Das erfindungsgemäße Verfahren arbeitet mit einem optischen Gassensor nach dem Zeeman-Effekt, und es hat gegenüber dem vorbekannten Verfahren mittels Absorption den Vorteil, daß die Meßempfindlichkeit unabhängig von der Lichtintensität ist. - Die Meßeinrichtung besteht im wesentlichen aus einem Gerät im Meßraum (Meßgerät), der als Schutzraum ausgebildet werden kann, und einem Gerät am Meßort (Gasaufnahmegerät), die durch eine Lichthinleitung und eine Lichtrückleitung miteinander verbunden sind. Damit eignet sich dieser optische Gassensor aufgrund der räumlichen Trennung der Elektronik von den elektrisch neutralen optischen Meßzellen besonders zur Überwachung von explosiven Gasen im Bergbau, in der Offshore-Technik und in der chemischen Industrie.

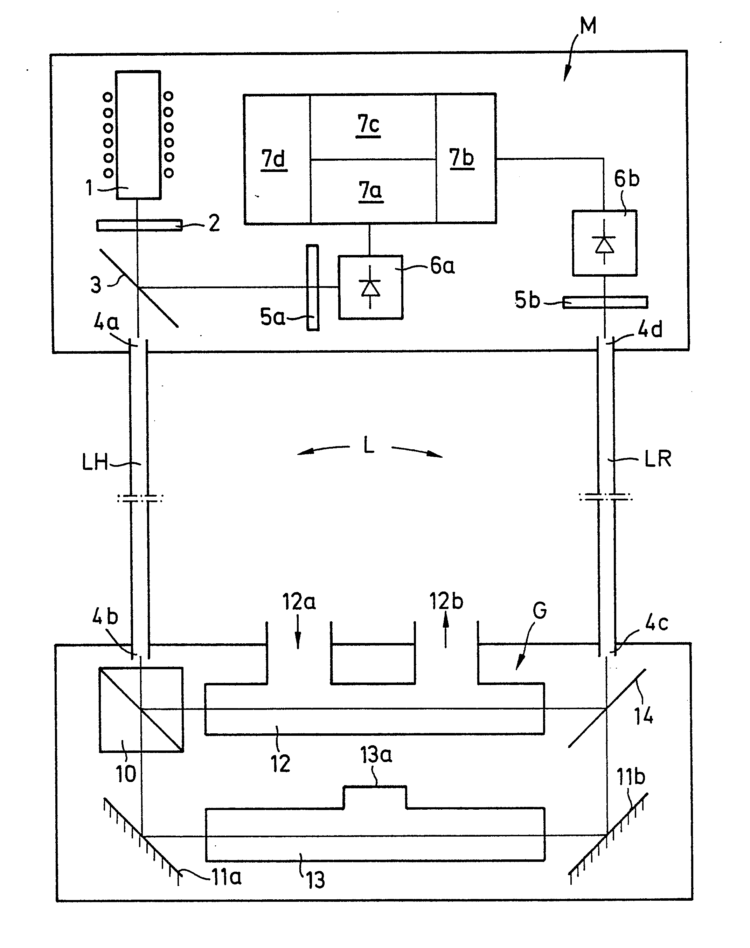

Ein Ausführungsbeispiel der Erfindung ist in der Zeichnung dargestellt und wird im folgenden näher beschrieben. Die Figur zeigt schematisch Aufbau und Lichtstrahlenverlauf eines optischen Gassensors nach dem Zeeman-Effekt.

Bezeichnet sind mit

M Meßgerät im Meßraum (Schutzraum)

G Gasaufnahmegerät am Meßort

L Lichtwellenleiter (optische Fasern)

LH Lichthinleitung

LR Lichtrückleitung

1 He-Ne-Laser mit Magnet um den Resonator

2 $\lambda$/4-Platte

3 Strahlaufteiler (halbdurchlässiger Spiegel)

4a-d Optische Koppelvorrichtungen (Stecker, kurz: Koppler)

5a-b Analysatoren

6a-b Fotodioden

7 Zähler (Rechner) mit:

7a Referenzzähler,

7b Meßzähler,

7c Differenzzähler und

7d Speicher;

10 Polarisations-Teilerwürfel

11a-b Umlenkspiegel

12 Meßküvette für das Meßmedium, mit:

12a Gaseinlaß und

12b Gasauslaß;

13 Referenzküvette für das Referenzmedium, mit:

13a Druckausgleichsmembran

14 Strahlenüberlagerer (halbdurchlässiger Spiegel).

Wie aus der Figur ersichtlich ist, besteht die Meßeinrichtung aus einem Gerät im Meßraum (Meßgerät M) und einem Gerät am Meßort (Gasaufnahmegerät G). Beide sind durch Lichtwellenleiter L, genauer: durch eine Lichthinleitung LH und eine Lichtrückleitung LR, die aus einer polarisationserhaltenden optischen Faser bestehen, und über Lichtkoppelvorrichtungen 4a-d miteinander verbunden. Damit können die Meßstellen (Gasaufnahmegeräte G) und die Auswerteeinheiten (Meßgeräte M) räumlich über Entfernungen von mehreren Kilometern getrennt und die Meßgeräte in einem Schutzraum aufgestellt werden, so daß der erforderliche Schutz vor explosiven oder giftigen Gasen gewährleistet ist.

Im Meßgerät M sind folgende Hauptteile vorgesehen: als Herzstück ein Zähler (Rechner) 7, der aus dem Referenzzähler 7a, Meßzähler 7b, Differenzzähler 7c und Speicher 7d besteht. Auf der einen Seite sind ein He-Ne-Laser 1 mit einem Magnet um den Resonator und in Strahlrichtung eine λ/4-Platte 2, ein Strahlaufteiler (halbdurchlässiger Spiegel) 3 zur Abzweigung des Referenzstrahls und der Koppler 4a der Lichthinleitung LH angeordnet. Auf der anderen Seite sind der Koppler 4d für die Lichtrückleitung LR und in Strahlrichtung ein Analysator 5b und eine Fotozelle 6b mit einer Verbindung zum Meßzähler 7b angeordnet. Ebenso sind in der Referenzstrahlrichtung Analysator 5a und Fotozelle 6a mit einer Verbindung zum Referenzzähler 7a angeordnet.

Im Gasaufnahmegerät G sind dagegen folgende Hauptteile vorgesehen: eine längliche Meßküvette (Glas-oder Quarzgefäß mit plangeschliffenen Stirnflächen) 12 für das zu messende Medium, und parallel hierzu eine Referenzküvette 13 für das Referenzmedium. Die Meßküvette hat seitlich eine Gaseintritts-und eine Gasaustrittsöffnung 12a bzw. b. Die Referenzküvette hat seitlich eine Druckausgleichsmembran 13a. Auf der einen Seite des Gerätes sind der Koppler 4b der Lichtherleitung LH, und in Strahlrichtung ein Polarisations-Teilerwürfel 10 zur Aufteilung des Strahls in den Meß-und den Referenzstrahl und ein Umlenkspiegel 11a angeordnet. Auf der anderen Seite sind dagegen ein Umlenkspiegel 11b für den Referenzstrahl, und in Strahlrichtung ein Strahlenüberlagerer (halbdurchlässiger Spiegel) 14 und der Koppler 4c der Lichtrückleitung LR angeordnet.

Das mit dieser Einrichtung, einem optischen Gassensor nach dem Zeeman-Effekt, durchgeführte Meßverfahren verläuft wie folgt:

Der Resonator des He-Ne-Lasers 1 wird axial von einem starken Magnetfeld durchsetzt, so daß er zwei entgegengesetzt zirkularpolarisierte Lichtstrahlen von geringfügig unterschiedlicher Frequenz aussendet. Diese überlagern sich zu einer Schwebungsfrequenz, die man über die schnellen Fotodioden 6a-b mißt.

Mit einer λ/4-Platte 2 (im Meßgerät M) und einem Polarisations-Teilerwürfel 10 (im Gesamtaufnahmegerät G) trennt man die beiden unterschiedlichen Frequenzen, führt die eine Frequenz durch die Meßküvette 12, die andere Frequenz dagegen durch die Referenzküvette 13 und überlagert beide Frequenzen wieder mittels des Strahlüberlagerers (halbdurchlässiger Spiegel) 14. Damit erhält man je nach der Zu-oder Abnahme der optischen Dichte in der Meßküvette und der damit verbundenen Laufzeitänderung des Lichtes eine steigende oder sinkende Schwebungsfrequenz.

Dann führt man diesen Lichtstrahl über den Lichtwellenleiter LR zum Meßgerät M zurück, setzt mittels der Fotozelle 6b die optischen in elektrische Signale um und leitet die Meßschwebungsfrequenz zu dem Meßzähler 7b. Im Meßgerät wird von dem vom Laser 1 ausgehenden Lichtstrahl mittels des Strahlteilers (halbdurchlässiger Spiegel) 3 ein Referenzstrahl abgezweigt, und über Analysator 5a und Fotozelle 6a wird die Referenzschwebungsfrequenz zum Referenzzähler 7a geführt. Meß-und Referenzzähler sind mit dem Differenzzähler 7c verbunden, der die Differenz zwischen Meß-und Referenzschwebungsfrequenz ermittelt, womit sich letztlich eine Veränderung der optischen Dichte in der Meßküvette in einer entsprechenden Differenz zwischen den beiden Zählern bemerkbar macht.

**Ansprüche**

1. Verfahren zum Messen der Gaskonzentration in einem Gasgemisch mit folgenden Verfahrensschritten:

Man überträgt Licht über eine optische Faser (LH) zu einer Meßzelle (12), die das zu untersuchende Gasgemisch enthält, läßt es durch die Meßzelle hindurchtreten, überträgt das aus der Meßzelle austretende Licht über eine optische Faser (LR) zu einer Meßeinrichtung (M) und vergleicht es dort mit einem Referenzlicht,

dadurch gekennzeichnet, daß man die Veränderung der optischen Dichte des Gasgemisches in einer Meßküvette (12) aus der Laufzeitänderung des Lichtes durch einen Vergleich mit der beim Zeeman-Effekt auftretenden Schwebungsfrequenz des Lichtes ermittelt, wozu der Resonator eines He-Ne-Lasers (1) axial von einem starken Magnetfeld durchsetzt wird und er folglich zwei entgegengesetzt zirkularpolarisierte Lichtstrahlen von geringfügig unterschiedlicher Frequenz aussendet, die sich zu einer Schwebung überlagern, deren Frequenz man über schnelle Fotodioden (6a-b) mißt.

2. Meßverfahren nach Anspruch 1, dadurch gekennzeichnet, daß man mit einer λ/4-Platte (2) und einem Polarisations-Teilerwürfel (10) die beiden unterschiedlichen Frequenzen trennt, die eine Frequenz durch eine Meßküvette (12), die andere Frequenz dagegen durch eine Referenzküvette (13) führt, und beide Frequenzen wieder überlagert, so daß man eine je nach der Zu-oder Abnahme der optischen Dichte in der Meßküvette steigende oder sinkende Schwebungsfrequenz erhält.

3. Meßverfahren nach Anspruch 2, dadurch gekennzeichnet, daß die Frequenz der Meßschwebung mit einem Zähler (7b) hochgezählt und diese mit der am Referenzzähler (7a) registrierten Ausgangsschwebung des Lasers verglichen wird, so daß eine Veränderung der optischen Dichte in der Meßküvette sich in einer entsprechenden Differenz (Zähler 7c) zwischen den beiden Zählern bemerkbar macht.

4. Einrichtung zur Messung der optischen Dichte eines Gasgemisches (optischer Gassensor), insbesondere zur Durchführung des Verfahrens nach einem der Ansprüche 1 bis 3, bestehend aus folgenden Hauptteilen:
Lichtquelle (1), Lichthinleiter (LH), Meßzelle (12) für das zu untersuchende Gasgemisch, Lichtrückleiter (LR), Lichtkoppelvorrichtungen, Fotozellen und ein Rechner (7) zur Verarbeitung der von den Fotozellen erfaßten Signale,
dadurch gekennzeichnet, daß die Einrichtung aus einem Gerät im Meßraum (Meßgerät M) und einem Gerät am Meßort (Gasaufnahmegerät G) besteht, die durch eine Lichthinleitung (LH) und eine Lichtrückleitung (LR) über Lichtkoppelvorrichtungen (4a-d) miteinander verbunden sind, wobei der Meßraum als Schutzraum ausgebildet ist.

5. Meßeinrichtung nach Anspruch 4, dadurch gekennzeichnet, daß im Meßgerät (M) folgende Hauptteile vorgesehen sind:
ein Zähler (7) mit den Teilen Referenzzähler (7a), Meßzähler (7b), Differenzzähler (7c) und Speicher (7d),
auf der einen Seite ein He-Ne-Laser (1) mit einem Magnet um den Resonator und in Strahlrichtung eine λ/4-Platte (2), ein Strahlaufteiler (3) zur Abzweigung des Referenzstrahls und der Koppler (4a) der Lichthinleitung, und
auf der anderen Seite der Koppler (4d) für die Lichtrückleitung und in Strahlrichtung ein Analysator (5b) und eine Fotozelle (6b) mit einer Verbindung zum Meßzähler (7b), letzteres ebenso beim Referenzstrahl (5a, 6a, 7a).

6. Meßeinrichtung nach Anspruch 4 oder 5, dadurch gekennzeichnet, daß im Gasaufnahmegerät (G) folgende Hauptteile vorgesehen sind:
eine längliche Meßküvette (12) mit je einer seitlichen Gaseintritts-und -austrittsöffnung (12a-b),
parallel dazu eine Referenzküvette (13) mit seitlicher Druckausgleichsmembran (13a),
auf der einen Seite der Koppler (4b) der Lichtherleitung und in Strahlrichtung ein Polarisations-Teilerwürfel (10) zur Aufteilung des Strahls in den Meß-und den Referenzstrahl und ein Um lenkspiegel (11a), und
auf der anderen Seite ein Umlenkspiegel (11b) für den Referenzstrahl und in Strahlrichtung ein Strahlenüberlagerer (14) und der Koppler (4c) der Lichtrückleitung.